# EUROPEAN PATENT APPLICATION

(11) **EP 4 708 619 A1**
(43) Date of publication of application: **11.03.2026**
(21) Application number: 25200887.5
(22) Date of filing: 08.09.2025
(51) Int. Cl.: H02J 7/00, F24F 12/00, F24F 5/00, F24F 11/00

(54) **COMBINED THERMAL-ELECTRICAL STORAGE SYSTEM IN HVAC SYSTEM**

(30) Priority: 09.09.2024 US 202463692442 P
(71) Applicant: Carrier Corporation, Palm Beach Gardens, FL 33418 (US)
(72) Inventor: XU, Hui, Shanghai 201206 (CN)
(74) Representative: Dehns

(57) **Abstract**

A system includes an air conditioning system (100) associated with a building (102) and at least one energy storage device (200, 220, 290) including a thermally regenerative battery (220). A controller (250) is configured to supply power from at least one of an AC power grid (280) and the thermally regenerative battery (220) to one or more components of the air conditioning system (100).

## Description

### BACKGROUND

The embodiments described herein relate to air conditioning systems.

Electrical energy drives a myriad of devices and equipment in commercial, industrial, residential applications, and data centers. For example, electrical energy drives lights, motors, household appliances, medical equipment, computers, air conditioning systems, electric vehicle charging stations, data centers processing and cooling needs, and many other electrical devices. In most areas, power utilities generate and distribute electricity through an AC power grid. Shortages and/or increased costs associated with the use of fossil fuels, intermittency of renewable resources, power demand and supply variabilities, and increased demand of energy, among others factors, significantly impact the continuous availability and cost of electricity to consumers and businesses. In general, shortages and/or increased costs often occur during times of peak demand. Peak demand may occur based on time of day, such as in the morning or in the evening. On a more random basis, peak demand (or a demand greater than an available supply) may occur as a result of a natural disaster, or during extensive times of e.g., cloudiness, if the power from the grid comes from solar energy, or wind variability, if the power from the grid comes from wind turbines. For example, a hurricane or earthquake may damage the power grid and/or electric generators of the power utilities, thereby resulting in substantial loss of electric power to commercial, industrial, and residential applications. Repairs to these damaged lines and generators may take hours, days, or weeks. Various sites also may lose power from the power grid for other reasons, including maintenance. During these times of lost power, the sites may be unable to continue operations. Moreover, increasing numbers of data centers significantly add to the demand of energy from the grid.

Often, electrical energy from the power grid is more expensive during times of peak demand. For example, a power utility may employ low-cost electrical generators during periods of minimum demand, while further employing high-cost electrical generators during periods of peak demand. Unfortunately, the existing infrastructure does not adequately address these different costs associated with peak and minimum demands. As a result, commercial, industrial, data centers and residential applications typically draw power from the power grid during times of peak demand, despite the higher costs associated with its generation.

Some energy consumers, such as commercial, industrial, data centers, and residential users may be driven by factors other than cost, such as a desire to support sustainable energy options as further described below.

### SUMMARY

According to a first aspect of the invention there is provided a system, the system includes an air conditioning system associated with a building and at least one energy storage device including a thermally regenerative battery. A controller is configured to supply power from at least one of an AC power grid and the thermally regenerative battery to one or more components of the air conditioning system.

The air conditioning system may include a first unit and a second unit.

The system may be a split system and the first unit may be an outdoor unit and the second unit may be an indoor unit.

The air conditioning system may include a compressor including a compressor drive configured to be connected directly to the AC power grid.

The system may comprise a power converter. The controller may be operable to control the power converter to supply power from at least one of the AC power grid and the thermally regenerative battery to the one or more components of the air conditioning system.

The power converter may include an AC/DC converter that provides power to the one or more components of the air conditioning system and/or to the at least one energy storage device.

The system may comprise a power bus operably coupled to the power converter and the AC power grid, the controller being operable to control the power bus to supply power from at least one of the AC power grid and the thermally regenerative battery to the one or more components of the air conditioning system.

The at least one energy storage device may include an electric battery, the electric battery being coupled to the power bus.

The controller may be configured to supply power from the electric battery to the one or more components of the air conditioning system.

The controller may be configured to supply power from the power bus to the electric battery.

The system may comprise a solar thermal collector operably coupled to the thermally regenerative battery.

The at least one energy storage device may include a tank containing a storage material, the storage material being thermally coupled to the air conditioning system.

In The solar thermal collector may be thermally coupled to the storage material.

According to a second aspect of the invention, there is provided a method of operating an air conditioning system including determining whether a user has agreed to reduce an energy usage, upon determining that the user has agreed to reduce the energy usage, at least partially powering one or more components of the air conditioning system using at least one energy storage device including a thermally regenerative battery, and upon determining that the user has not agreed to reduce the energy usage, powering one or more components of the air conditioning system using an AC power grid.

The method may include, upon determining that the user has agreed to reduce the energy usage, powering at least one other load using the at least one energy storage device.

The method may include determining that the at least one energy storage device is to be used to power one or more loads.

Determining that the at least one energy storage device is to be used to power one or more loads may include determining that power from the AC power grid is at least one of (i) at a peak price or (ii) is at or approaching a grid capacity.

The method may include charging the at least one energy storage device.

Charging the thermally regenerative battery may include converting radiation into thermal energy via a solar thermal collector and delivering the thermal energy to the thermally regenerative battery.

The method may include: determining if a status of at least one energy storage device is within safety and/or operational limits; wherein upon determining that the status of at least one energy storage device is not within limits, continuing to charge the at least one energy storage device; and upon determining that the status of at least one energy storage device is within limits, powering at least one of the one or more components of the air conditioning system, other loads or the AC power grid using the at least one energy storage device.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and is not limited by the accompanying figures in which like reference numerals indicate similar elements.
FIG. 1 is a diagram of a system;
FIG. 2 is a schematic diagram of the system of FIG. 1 in a first mode of operation;
FIG. 3 is a schematic diagram of the system of FIG. 1 in a second mode of operation;
FIG. 4 is a schematic diagram of the system of FIG. 1;
FIG. 5 depicts a controller of the system of FIG. 1.
FIG. 6 depicts communication between a controller, a thermostat, and a remote system.
FIG. 7 depicts a control process.

### DETAILED DESCRIPTION

With current global electrification and decarbonization efforts, there are incentives to use efficient, optimized, all-electric air conditioning systems that provide comfort while being dispatchable (on-off, adjusted or variable) under different pricing conditions, or after receiving a utility signal. By way of example, the utility signal may be received from an electrical AC power grid, and may include an independent system operator (ISO), which may include an independent, federally regulated entity established to coordinate regional transmission in a non-discriminatory manner and ensure the safety and reliability of the electric system, or a regional transmission organization (RTO) which may operate bulk electric power systems across much of a geographic area and are generally independent, membership-based, non-profit organizations that ensure reliability and optimize supply and demand bids for wholesale electric power, or from a virtual power plant, generally considered to include a connected aggregation of distributed energy resource (DER) technologies providing integration of renewables and demand flexibility. Reference to a utility refers to one or more entities involved in the generation, transmission, and/or distribution of electrical power.

Embodiments described herein relate to an air conditioning system that includes at least one electrical energy storage system (e.g., batteries, supercapacitors) operable to provide a level of dispatchability needed to interconnect with the electrical power grid.

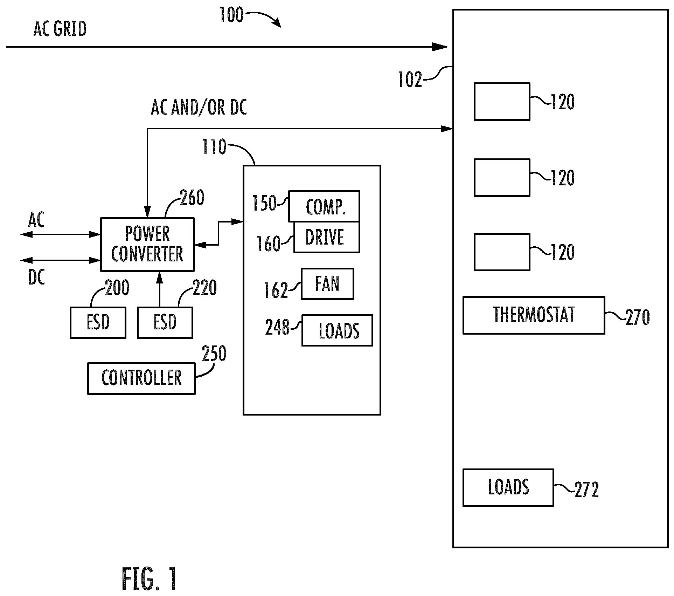

FIG. 1 is a schematic diagram of a system 100 according to an embodiment. The system 100 includes components of an air conditioning system. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system may include known types of systems such as heat pumps, geothermal heat pumps, chillers, split systems, packaged systems, all-in-one systems, etc. As shown, the air conditioning system 100 may include a first unit 110 and one or more second units 120. Depending on the nature of the air conditioning system, the first unit 110 and the second unit(s) 120 may be separately located (indoors or outdoors) or may be co-located (indoors or outdoors). For example, in a split system, the first unit 110 is an outdoor unit (e.g., compressor and heat exchanger) and the one or more second unit(s) 120 are indoor units (e.g., expansion mechanisms, heat exchangers). In a packaged system (e.g., rooftop or ground), the first unit 110 and the second unit 120 are co-located in a single footprint outside a building. In a chiller, the first unit 110 and the second unit 120 may be co-located (both indoor or outdoor) or separately located. Certain all-in-one systems may have the first unit 110 and the second unit 120 co-located inside a building 102.

In the non-limiting embodiment illustrated in FIG. 1, the first unit 110 is an outdoor unit of a split system and is located on ground level next to a building 102, on a rooftop of the building 102, or at any other suitable location. The second unit(s) 120 may be located inside the building 102, as is common with split systems. It is understood that FIG. 1 is one example, and embodiments described herein are not limited to split systems.

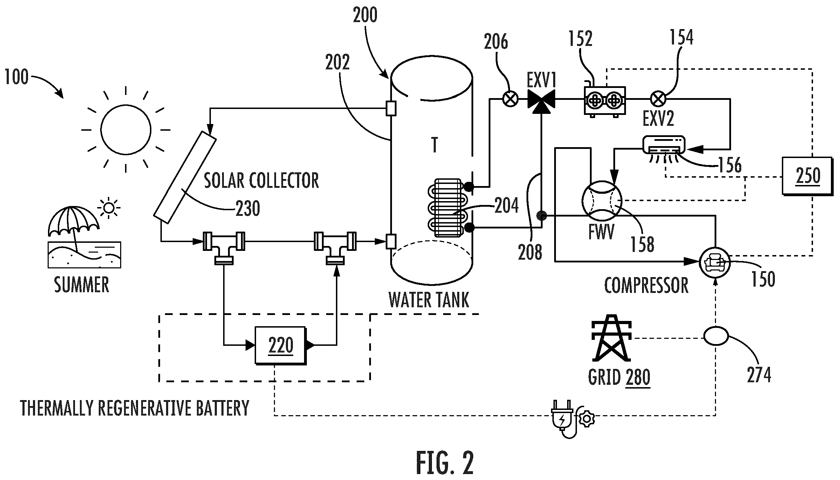

With continued reference to FIG. 1 and further reference to FIGS. 2-4, an example of the fluid loop of the system 100 are illustrated in more detail. As shown, the system 100 includes a compressor 150, a first heat exchanger 152, at least one expansion valve 154, and a second heat exchanger 156 fluidly coupled to form a closed fluid loop through which a working fluid R, such as refrigerant for example, circulates. In a first or cooling mode of operation, shown in FIG. 2, the working fluid R is configured to flow from the compressor 150 to the first heat exchanger 152, from an outlet of the first heat exchanger 152 to the expansion device 154, from the expansion device 154 to the second heat exchanger 156, and from an outlet of the second heat exchanger 156 to an inlet of the compressor 150 to complete the fluid loop.

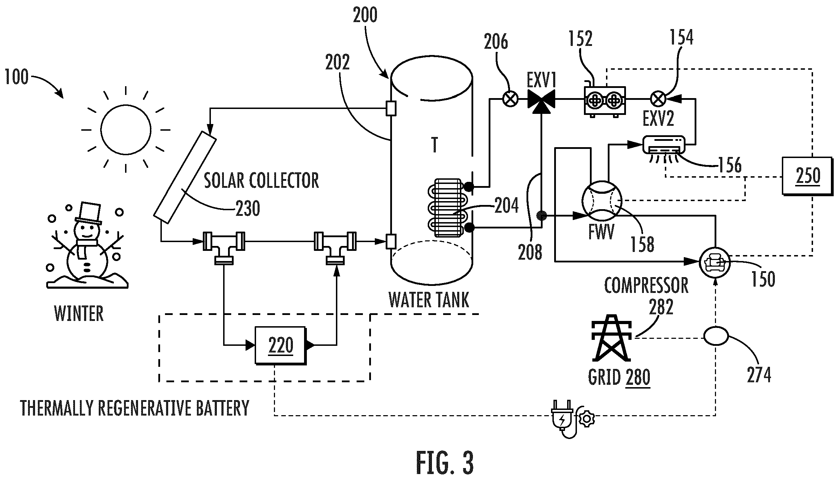

In the illustrated, non-limiting embodiment, the system 100 additionally includes a four-way valve 158 such that the flow of working fluid R within the closed loop is reversible. Via the four-way valve 158, operation of the system 100 can be transformed between a first, cooling mode and a second, heating mode. In the heating mode, as shown in FIG. 3, the working fluid R is configured to flow from the compressor 150 to an inlet of the second heat exchanger 156, from an outlet of the second heat exchanger 156 to an inlet of the expansion device 154, from the expansion device 154 to an inlet of the first heat exchanger 152, and from an outlet of the first heat exchanger 152 to an inlet of the compressor 150. In embodiments where the flow of working fluid is reversible, the expansion device 154 may include a plurality of expansion devices, such that a respective expansion device may be associated with each direction of flow of the working fluid/or operational mode of the system 100.

The compressor 150, the first heat exchanger 152, and at least one fan 162 (FIG. 1) for moving an air flow across the first heat exchanger 152 may be arranged within the first unit 110. The second unit 120 may include the second heat exchanger 156 and at least one fan (not shown) for moving an air flow across the second heat exchanger. The expansion device 154 associated with operation of the system 100 may be arranged within the second unit 120. However, in embodiments including a plurality of expansion devices, a first expansion device (not shown), such as associated with operation of the system in the second, heating mode, may be arranged within the first unit 110 and a second expansion device (not shown), associated with operation of the system 100 in the first, cooling mode, may be arranged within the second unit 120.

With continued reference to FIG. 1, the system 100 may include at least one energy storage device. The at least one energy storage device (ESD) may be located remotely from one or both of the first unit 110 and the second unit 120. In an embodiment, the at least one ESD is located within the building 102. However, embodiments where the at least one ESD is arranged within one of the first and second units 110, 120 are also contemplated herein. As will be described in more detail below, the at least one energy storage device may be used to storage and selectively provide thermal energy and/or power to the system 100.

In the illustrated, non-limiting embodiment of FIGS. 2-4, a first ESD 200 is a thermal storage device including a tank 202 filled with a storage material T. Although the tank 202 is illustrated as having water as the storage material T, embodiments containing another storage material T, such as a phase change material for example, are also within the scope of the disclosure. A heat exchanger 204 may be associated with the energy storage device 200 such that the storage material T acts as a heat sink for absorbing heat from the working fluid R of the system 100. For example, when the air conditioning system 100 is in a first, cooling mode of operation, as shown in FIG. 2, the heat exchanger 204 may be operable as a heat rejection heat exchanger or a condenser relative to the flow of the working fluid R. In the illustrated, non-limiting embodiment, the heat exchanger 204 is arranged downstream from the compressor 150 and upstream from the first heat exchanger 152 relative to a flow of the working fluid R. Further a second expansion device 206 may be located directly downstream from an outlet of the heat exchanger 204 and upstream from an inlet of the first heat exchanger 152 relative to a flow of the working fluid R.

In the first cooling mode, the working fluid R may flow directly from an outlet of the compressor 150 to the heat exchanger 204 thermally coupled to the first ECS 200. The storage material T arranged in a heat transfer relationship with the working fluid R absorbs heat from the working fluid R. From an outlet of the heat exchanger 204, the cooler working fluid R is provided to the second expansion device 206, and then to an inlet of the first heat exchanger 152, where further heat is exhausted from the working fluid R. The working fluid R then flows through the second heat exchanger 156 and to an inlet of the compressor 150to complete the vapor compression cycle of the air conditioning system.

As shown, a bypass conduit 208 may extend between an outlet of the compressor 150 and an inlet of the first heat exchanger 152 (in a first, cooling mode) such that flow within the bypass conduit 208 bypasses the heat exchanger 204 of the first ESD 200. A valve V1 associated with the bypass conduit 208 is adjustable between a plurality of positions to control the flow of working fluid R provided to the first ESD 200. The valve V1 may be operable to bypass the first ESD 200 and heat exchanger 204 in embodiments where the temperature of the storage material T exceeds the temperature of the working fluid R, or where the storage material T has reached its thermal capacity. Accordingly, in some embodiments, all or at least a portion of the working fluid R output from the outlet of the compressor 150 is provided directly to the first heat exchanger 152. It should be understood that embodiments where a portion of the working fluid R is provided to the heat exchanger 204 of the first ESD 200 and a portion of the working fluid R bypasses the first ESD 200 and heat exchanger 204 are also contemplated herein.

In other embodiments, such as when the air conditioning system 100 is in a second, heating mode of operation, the storage material T may act as a heat source operable to deliver heat to the working fluid R of the system 100. When the air conditioning system 100 is in a second, heating mode of operation, as shown in FIG. 3, the second heat exchanger 156 is operable as a heat rejection heat exchanger or condenser and the first heat exchanger 152 may be operable as an evaporator. The heat exchanger 204 of the first ESD 200 may be arranged downstream from the outlet of the first heat exchanger 152 and upstream from the compressor 150 relative to a flow of the working fluid R. The working fluid R output from the first heat exchanger 152 may be returned directly to an inlet of the compressor 150 via the bypass conduit 208, or alternatively, may flow through the heat exchanger 204 thermally coupled to the first ESD 200. From an outlet of the heat exchanger 204, the working fluid R is provided to an inlet of the compressor 150 to repeat the vapor compression cycle of the air conditioning system 100.

The air conditioning system 100 may be operated in a continuous heating mode when the outdoor unit 110 needs defrosting. In such embodiments, the expansion device 154 will be fully open, and the resulting hot, high pressure working fluid R from the expansion device 154 will pass through the first heat exchanger 152 of the outdoor unit 110. During continuous heating, the heat exchanger 204 at the first ESD 200 may therefore be operable as an evaporator in which the working fluid R is configured to absorb heat from the storage material T. In other embodiments, such as when the air conditioning system 100 is in a high-performance heating mode, both the first heat exchanger 152 and the heat exchanger 204, in combination, will function as evaporators. During a high-performance heating mode, the expansion device 206 may be fully open. In an embodiment, the high-performance heating mode is used to consume unused energy collected by a solar thermal collector 230, as will be described in more detail below.

The system 100 may alternatively or additionally include a second ESD 220. In an embodiment, the second ESD 220 is selectively operable to provide, under certain circumstances, at least a portion of the power required to operate one or more of components of the system 100, such as the compressor 150 or the fan 162 associated with the first and/or second heat exchangers 152, 156 for example. The second ESD 220 may be located within the first unit 110, within the second unit 120, or remotely from both the first unit 110 and second unit 120. It should be understood that the location of the components as shown in FIG. 1 is intended as an example only and the disclosure should not be limited thereto.

The second ESD 220 may be implemented using an apparatus for storing electrical energy including one or more of, for example, a battery, battery modules, battery cells, supercapacitor, etc. In embodiments where the second ESD 220 includes a battery, the battery may include several cells in either modular form or as a stand-alone, multi-cell array. The battery may be made of a single or multiple packaged self-contained systems, battery modules or individual cells. The battery , such as a complete plug and play battery, may include a box, wires, cells, and modules. For example, the battery may include a group of cells configured into a self-contained mechanical and electrical unit. The second ESD 220 may include other components (e.g., an ESD management system (ESDMS)) that are electrically coupled to the second ESD 220 and may be adapted to communicate directly or through the ESDMS to a controller.

In the illustrated, non-limiting embodiment, the second ESD 220 is a thermally regenerative battery operable to convert waste heat into electricity. A thermally regenerative battery stores energy as heat rather than as electricity. In the illustrated, non-limiting embodiment, the thermal regenerative battery is a thermally regenerative ammonia battery that is rechargeable using low-grade waste heat, for example having a temperature less than 130°C. The thermally regenerative battery may include liquid ammonia that reacts with a copper electrode to generate electricity. Thermal energy or waste heat may then be used to vaporize the ammonia and condense it back into a recharged liquid state, thereby regenerating the reactants within the battery.

As shown, in an embodiment, the system 100 further includes a solar thermal collector 230 operably coupled to the second ESD 220, and in some embodiments, the first ESD 200. A solar thermal collector 230 is a device operable to absorb solar radiation and convert that radiation into heat or thermal energy. The thermal energy resulting from the solar thermal collector 230 may be provided to the thermally regenerative battery 220 to "charge" or "recharge" the reactants, for example ammonia, within the thermal regenerative battery. Alternatively, or additionally, thermal energy from the solar thermal collector 230 may be stored by the storage material T of the first ESD 200. Further, in some embodiments, thermal energy from the first ESD 200 may be output to the solar thermal collector 230 and/or to the thermal regenerative battery 220 such as to recharge the thermal regenerative battery 220.

On a sunny day, the solar thermal collector 230 is operable to generate thermal energy. Accordingly, on a sunny day, solar thermal collector 230 is a source of thermal energy that can be used to charge the thermally regenerative battery 220 and/or may be used to heat the storage material T of the first ESD. In instances where the solar thermal collector 230 is operable to generate thermal energy, but the thermal energy generated is insufficient to perform a charging operation of the thermally regenerative battery 220, the thermal energy may be stored by the first ESD 200. On cloudy days, where the solar thermal collector 230 is not operable to generate thermal energy, the thermal energy used to regenerate the thermally regenerative battery 220 may be provided from the first ESD 200. In instances where the thermally regenerative battery 220 is not operational, the system will function as a simplified air conditioning system.

With reference again to FIG. 1, the system 100 includes a controller 250, and in some embodiments, includes at least one power converter 260. One or both of the power converter 260 and controller 250 may be separate or located remotely from the first unit 110. In other embodiments, one or more of the power converter 260 and controller 250 may be located adjacent to or outside the first unit 110. One or more of the power converter 260 and controller 250 may be located in building 102. In an embodiment, one or more of the power converter 260 and the controller 250 may be located in the first unit 110.

The first unit 110 may include a control unit (not shown) for controlling operation of the first unit 110, such as for controlling the compressor 150, a drive 160 associated with the compressor 150, or the fan 162 associated with the first heat exchanger 152. This allows components of the described embodiments to be retrofit to existing first units 110 of air conditioning systems and/or second units 120 of air conditioning systems. The locations of all components in the drawings are examples, and embodiments include modification of the locations of components shown in the drawings. For example, components illustrated as connected to the first unit 110, may be retrofit components added to an existing first unit 110. Although shown as separate boxes, elements may be joined into sub-assemblies and assemblies, anywhere in the system, indoor or outdoor, without departing from embodiments of the disclosure.

The controller 250 may communicate with an air conditioning controller system controller (not shown) and/or one or more energy storage device controllers (not shown). In some embodiments, a single controller may implement all the functions of the controller 250, air conditioning controller and at least one energy storage device controller. The controller 250 communicates with components of the described systems using wired and/or wireless connections, which are not illustrated in the drawings.

The various embodiments of the system 100 described herein allow for one or more components of the air conditioning system 100 to be powered solely by an AC power grid 280, powered solely by at least one energy storage device, or powered by both the AC power grid 280 and the at least one energy storage device, in conjunction. The one or more components of the air conditioning system 100 may include components in the first unit 110 and/or components in the second unit 120.

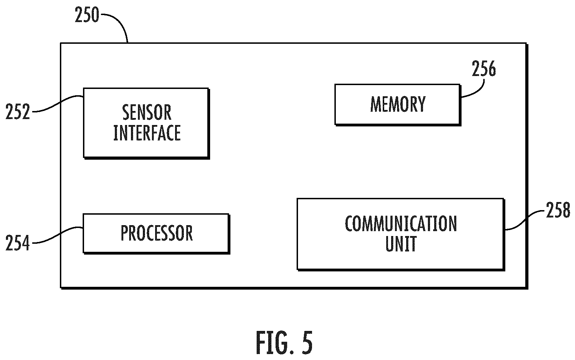

FIG. 5 depicts the controller 250 in accordance with an embodiment. The controller 250 includes a sensor interface 252 that can obtain operational parameters of the air conditioning system 100, such as pressures, temperatures, etc. As known in the art, the controller 250 can adjust operation of the air conditioning system based on sensed operational parameters. The controller 250 includes a processor 254 that controls the operation of the system 100. The processor 254 may be implemented using a general-purpose microprocessor executing a computer program stored on a storage medium to perform the operations described herein. Alternatively, the processor 254 may be implemented in hardware (e.g., ASIC, FPGA) or in a combination of hardware/software. The processor 254 allows the controller 250 to perform computations locally, also referred to as edge computing. The processor 254 can send commands to other components of the air conditioning system 100 based on a result of the local computations.

The controller 250 includes a memory 256 that may store a computer program executable by the processor 254, reference data, sensor data, etc. The memory 256 may be implemented using known devices, such as random-access memory. The controller 250 includes a communication unit 258 which allows the controller 250 to communicate with other components of the system 100, such as the first unit 110, the second unit 120 and a thermostat 270. The communication unit 258 may be implemented using wired connections (e.g., LAN, ethernet, twisted pair, etc.) and/or wireless connections (e.g., Wi-Fi, near field communications ("NFC"), Bluetooth, etc.).

The power converter 260 is used to perform any necessary power conversions including one or more of AC-AC, AC-DC, DC-AC and DC-DC. The power converter 260 may include several power converters at different locations in the system 100. The power converter(s) 260 may operate in a bi-directional manner so that one or more power conversions are bi-directional. As shown in FIG. 1, the power converter 260 may be connected to AC and/or DC power sources and/or loads. In the illustrated, non-limiting embodiment, a power converter 260 is arranged downstream from an electrical outlet of the thermally regenerative battery 220 and may be operable to convert DC power output from the thermally regenerative battery 220 to AC power. The power converter 260 may also provide power to one or more loads 272 in the building 102, the second units 120 (if in the building 102), and a thermostat 270.

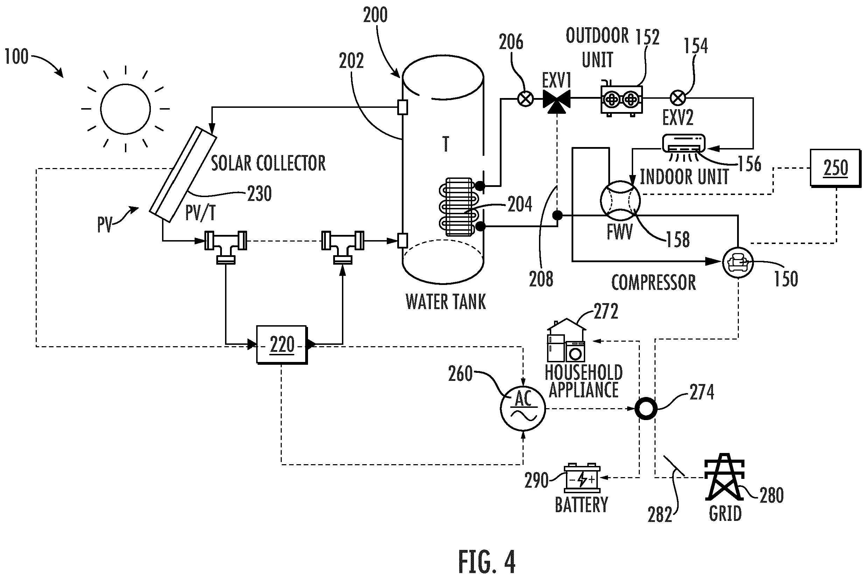

In the non-limiting embodiment of FIG. 4, each of the various power sources associated with the system 100 may be operably coupled to a power bus 274. Exemplary power sources include but are not limited to the AC power grid 280, the thermally rechargeable energy storage device 220, and in some embodiments, at least one additional energy storage device 290, such as an electric battery for example. Power from the power bus 274 is distributed to one or more loads of the air conditioning system, such as to the compressor drive 160, or a fan 162 for example, and/or one or more loads 272 of the building 102, such as a household appliance for example. In an embodiment, power from the power bus 274, such as power exceeding the demands of the air conditioning system, thermostat, and/or loads 272 may be provided to the energy storage device 290 to charge the energy storage device 290.

In operation, the controller 250 may choose a source of power for operation of one or more components of the system 100, such as compressor drive 160 of the compressor 150 and the fan 162 for example. The power source may be selected from the AC power grid 280 and the at least one energy storage device, such as energy storage device 220 and/or energy storage device 290. A grid disconnect 282 may be present in the connection between an AC power grid 280 and the first unit 110. Although the grid disconnect 282 is illustrated as being located upstream of the power bus 274, embodiments where such a disconnect is located downstream of a power bus 274 are also contemplated herein. This allows the first unit 110 to be powered by the energy storage device 220, or the energy storage device 290, independently from the AC power grid 280. The first unit 110 may also be powered by both the AC power grid 280 and at least one of the energy storage device 220 and energy storage device 290 in conjunction. The grid disconnect 282 may also be implemented as a mechanical switch controlled by controller 250 or in software by the controller 250 by controlling one or more power converters.

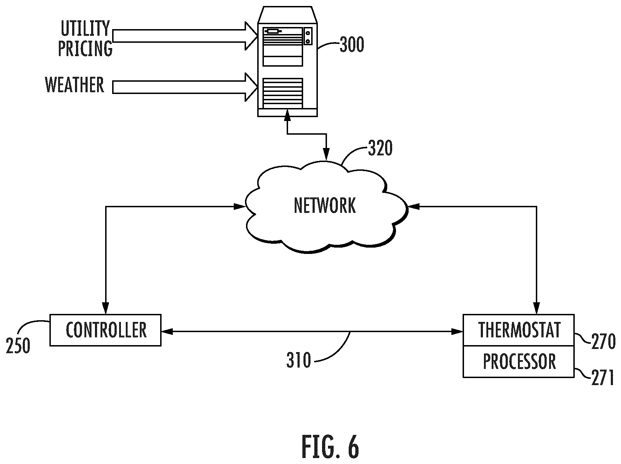

With reference now to FIG. 6, an exemplary form of communication between the controller 250, the thermostat 270 and a remote system 300 is illustrated. As noted above, the controller 250 may be integrated as part of an air conditioning controller and/or a battery controller or be independent and communicating to the air conditioning controller and/or energy storage controller. The controller 250 communicates with the thermostat 270 over a local link 310. The local link 310 may be a wired connection (e.g., twisted pair, four wire, power line communication, Modbus, CAN bus, etc.) and/or a wireless connection (e.g., WiFi, radio or Bluetooth, NFC, etc.). The thermostat 270 may also be implemented using a software application operating on a user device (e.g., mobile phone, tablet, laptop). The thermostat 270 may also provide occupancy, past performance, and weather information to the controller 250.

One or both of the controller 250 and the thermostat 270 may be in communication with a remote system 300 over a network 320. The network 320 may be a long-range network and may be implemented by a variety of communication protocols. The network 320 may be implemented via one or more networks, such as, but are not limited to, one or more of WiMax, a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), or any broadband network, and further enabled with technologies such as, by way of example, Global System for Mobile Communications (GSM), Personal Communications Service (PCS), Bluetooth, Wi-Fi, Matter, Fixed Wireless Data, 2G, 2.5G, 3G (e.g., WCDMA/UMTS based 3G networks), 4G, IMT-Advanced, pre-4G, LTE Advanced, 5G, 6G, mobile WiMax, WiMax 2, WirelessMAN-Advanced networks, enhanced data rates for GSM evolution (EDGE), General packet radio service (GPRS), enhanced GPRS, iBurst, UMTS, HSPDA, HSUPA, HSPA, HSPA+, UMTS-TDD, 1xRTT, EV-DO, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks, broadband networks, or messaging protocols.

The remote system 300 may be embodied as any type of processor-based computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system (e.g., cloud computing), a processor-based system, and/or a consumer electronic device. The remote system 300 provides information that is used by the controller 250 and/or thermostat 270 to implement an energy management routine that controls how power is consumed by the one or more components of the air conditioning system 100 and the loads 272. The information provided by the remote system 300 may include utility pricing, indicating the cost of electricity on the AC power grid 280 and weather information, which may be used to predict future utility pricing and usage of the one or more components of the air conditioning system. The utility pricing and weather may be pushed to, or pulled by, the remote system 300 using known networking techniques. The utility pricing and/or weather may be determined in real time or be forecasts of future conditions.

In the above-described embodiments, the controller 250 communicates with components of the described systems using wired and/or wireless connections, which are not illustrated in the drawings. Depending on the power sources used in an operation mode (e.g., one or more of AC power grid 280, energy storage device 220, energy storage device 290, auxiliary power sources, etc.), the controller 250 sends command signals to the various system components, such as power converter 260 and/or power bus 274 for example, to route power to one or more components of the air conditioning system 100, such as the first unit 110, the second unit(s) 120, along with the indoor load(s) 272, and any other loads.

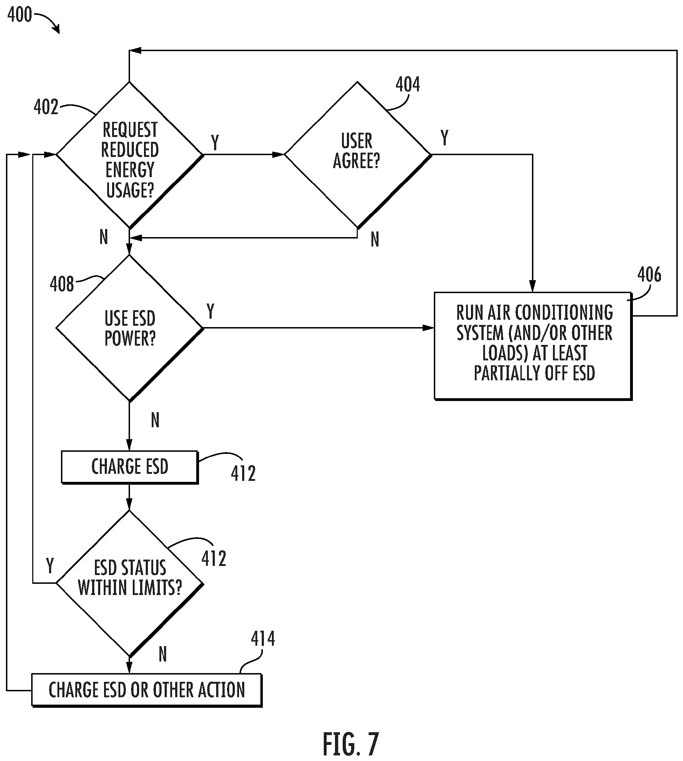

FIG.7 depicts a method 400 of operating an air conditioning system to manage the energy usage and sources thereof according to an embodiment energy management process 400 in an example embodiment. The energy management process 400 may be performed by the controller 250 and/or by the thermostat 270. At 402, the controller 250 determines if a request for a reduction in energy usage is present, or any other communication signal, such as a change in energy pricing, or an incentive. The utility provider may request a reduction in energy usage during a certain period of time to avoid a service interruption (e.g., a brownout), or other penalty or incentive such as a change in pricing. The request for a reduction in energy usage may be accompanied by an incentive (e.g., $5 off next energy bill). The request for reduction may also originate from an energy consumer, such as a data center, where the data center needs to maintain their processing and/or cooling loads and incentivizes other users to decrease their consumption to ensure energy availability.

If a request for a reduction in energy usage is present, in some embodiments, the flow proceeds to block 404 where a user (e.g., a customer of the utility) can approve or deny the request to reduce energy usage. The approve or deny determination may be pre-established by the user and pre-programmed into the controller 250 and/or the thermostat 270. For example, the user may wish to always reduce energy consumption, regardless of the terms. The user may wish to never reduce energy consumption, regardless of the terms. The user may wish to reduce energy consumption only if the utility offers an incentive. The approve or deny determination at 404 may also occur in real time, where the user enters an approval or denial of reduced energy consumption through the thermostat 270 or through a mobile device in communication with the thermostat 270 or the controller 250.

If the user approves reduced energy usage at block 404, flow proceeds to block 406 where one or more components of the air conditioning system (if needed), and/or other loads 272, are powered, at least in part, by at least one energy storage device 220 or 290. This may entail eliminating power supplied from the AC power grid (e.g., power from the AC power grid 280 is zero) such as by opening the grid disconnect 282 and powering one or more components of the air conditioning system 100 and/or other loads 272, using only the at least one energy storage device 220 and/or 290. In other embodiments, operating one or more components of the air conditioning system 100 and/or other loads 272 may include using both the AC power grid 280 and the at least one energy storage device 220 and/or 290, in conjunction, to power the one or more components of the air conditioning system 100 and/or other loads 272. The controller 250 can limit the amount of power drawn from the AC power grid 280 by controlling the power converters 260 and/or power bus 274 in the system 100 to reduce the amount of AC power drawn from the AC power grid 280.

Operating the one or more components of the air conditioning system 100 using the at least one energy storage device 220 and/or 290 may also include limiting the amount of power used from the AC power grid 280 to a power limit (e.g., 1 kW during 2 hours). The controller 250 can limit the amount of power drawn from the AC power grid 280 by controlling the various power converters 260 and/or power bus 274 to reduce the amount of AC power drawn from the AC power grid 280. At 406, other loads may be powered by the at least one energy storage device 220 and/or 290 including indoor load(s) 272, which may include indoor DC load(s) and/or indoor AC load(s).

At some point, the at least one energy storage device 220 and/or 290 will lack sufficient charge such that the one or more components of the air conditioning system 100 or loads 272 will need to be powered exclusively by the AC power grid 280. In an embodiment, the controller 250 can detect when a status, such as state of charge (SOC), state of health (SoH), voltage, temperature, etc., of the at least one energy storage device 220 and/or 290 is not within acceptable limits to power the one or more components of the air conditioning system or other loads 272. If the status of at least one energy storage device 220, 290 is not within acceptable limits, the respective energy storage device 220, 290 is not suitable to supply power to the system 100 or loads 272, such as via the power bus 274. Accordingly, the one or more components of the air conditioning system 100 and/or other loads 272 need to be powered by the AC power grid 280. This results in discontinuing discharging the at least one energy storage device 220 and/or 290 and/or initiating charging of the at least one energy storage device 220 and/or 290.

In some embodiments, the at least one energy storage device 220 and/or 290 may be charging while also discharging energy therefrom. For example, a portion of the ammonia within the thermally regenerative battery 220 may be interacting with a copper electrode to generate electricity while waste heat is simultaneously supplied to another portion of the ammonia to recharge the ammonia. However, in such embodiments, the amount of charging that occurs may be less than the simultaneous discharging such that the at least one energy storage device 220 and/or 290 is gradually discharged over time.

If the utility, or some other source, has not requested to reduce the energy usage at 402, flow proceeds to block 408 where the controller 250 determines if the system 100 should use power from the at least one energy storage device 220 and/or 290. One example of a situation where the system 100 should use power from the at least one energy storage device 220 and/or 290 occurs when the utility power is at least one of at a peak price, approaching a grid capacity or at the grid capacity. This determination may be made in real time or may be made previously using forecasting and communicated to the air conditioning system from the utility. Peak price does not necessarily require that the price for electricity be at a maximum but is generally known in the art as a period of higher than average energy costs. Whether the utility is at a peak price may be determined by utility pricing obtained from the remote system 300 or current or future weather information obtained from the remote system 300. This information may also be stored locally at controller 250. If the utility is at least one of at a peak price, approaching a grid capacity or at the grid capacity, flow proceeds to 406 where the one or more components of the air conditioning system 100 and loads 272 are powered by the at least one energy storage device 220 and/or 290 alone or in conjunction with the AC power grid 280. The controller 250 can limit the amount of power drawn from the AC power grid 280 by controlling the one or more power converters 260 in the system, as noted above. The utility power at a peak price and grid capacity are not the only factors that may be relied on in determining that the system should use power from the at least one energy storage device 220 and/or 290.

With respect to grid capacity, information regarding the grid capacity and current grid load can be obtained from a remote system, such as the source of the utility pricing. If the AC power grid 280 is at grid capacity or approaching grid capacity (e.g., within a threshold range of grid capacity and, optionally, increasing), then it may be prudent to use power from the at least one energy storage device 220 and/or 290 to avoid a power disruption.

Another example of a situation where the system should use power from the at least one energy storage device 220 and/or 290 occurs when a user requests reduced energy usage. The user may use the thermostat 270 to place the system 100 in reduced energy usage mode (e.g., eco-friendly mode) which causes the system 100 to use power from the at least one energy storage device 220 and/or 290 to power one or more components of the air conditioning system to the extent allowable.

In another example, the system 100 may use power from the at least one energy storage device 220 and/or 290 based on machine learning (ML) and/or artificial intelligence (AI) control algorithms implemented by controller 250 based on data from block 404 (e.g., User agree), or based on data from block 402 (e.g., Request reduced energy usage).

If at block 408, the system should not use power from the at least one energy storage device 220 and/or 290, flow proceeds to block 410 where the at least one energy storage device 220 and/or 290 is charged. In some embodiments, the second energy storage device 220 and/or the first energy storage device 200 may be charged whenever thermal energy is readily available via the solar thermal collector 230. The third energy storage device 290 may be charged via the AC power grid 280 whenever the energy pricing falls below a predefined threshold. Alternatively, or in addition, the third energy storage device 290 may be charged using energy output from the second ESD 220, such as when the second ESD 220 is not relied on to power the one or more components of the air conditioning system 100 and/or other loads 272, or when the thermal energy output from the solar thermal collector 230 exceeds the storage capacity of the second ESD 220.

At 412, the controller 250 determines if the battery status is within acceptable limits, including state of charge (SOC), state of health (SoH), temperature, voltage, or status beyond safety and/or operational limits. If yes, the flow returns to 402. At block 412, the controller 250 can detect parameters of the at least one energy storage device 220 and/or 290, to confirm that parameters such as state of health of the battery, operating range, temperature range, voltages, capacity, etc., are within the valid limits.

If at block 412, the energy storage device 220 or 290 has a status that is not within acceptable limits, flow proceeds to block 414 where the at least one energy storage device 220 and/or 290 may be charged if the SoC is low or may be disconnected completely if the at least one energy storage device 220 and/or 290 is not operating per safety and/or operational limits.

While FIG. 7 refers to operating one or more components of the air conditioning system and/or other loads to reduce power consumption, other techniques may be used to reduce power consumption, such as using a variable speed drive to reduce compressor speed, changing a thermostat set point, etc. In other embodiments, the utility could request an increase in energy usage. This request can be a real-time or a future request based on predicted conditions.

One or more operations of the process of FIG. 7 may be performed by the thermostat 270 if the thermostat 270 is equipped with a processor 271. The processor 271 may be implemented using a general-purpose microprocessor executing a computer program stored on a storage medium to perform the operations described herein. Alternatively, the processor 271 may be implemented in hardware (e.g., ASIC, FPGA) or in a combination of hardware/software. The controller 250 and thermostat may perform all or some of the operations of FIG. 7, in conjunction or individually.

In other embodiments, the controller 250 and/or the thermostat 270 executes a system enhancement routine to improve performance of the entire air conditioning system, based on optimization (including model predictive controls) or machine learning techniques, considering carbon impact, energy performance, energy cost, lifecycle cost, lifetime impact on equipment, reliability. The system enhancement routine may operate with or without use of information regarding weather, occupancy, historical usage, customer preferences, equipment performance maps (HVAC, battery), potential for energy outages etc. Machine learning techniques on customer preferences, usage, elasticity of decisions regarding temperature, cost, environmental issues, etc. could be used to improve controls logic, and optimization. Other control strategies such as pre-cooling and preheating, which have an advantage on cost, performance, efficiency, environment, comfort, reliability.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the present invention can be modified to incorporate any number of variations, alterations, substitutions, combinations, subcombinations, or equivalent arrangements not heretofore described, but which are within the scope of the present invention as the defined by the appended claims. Additionally, while various embodiments of the present disclosure have been described, it is to be understood that aspects of the present invention may include only some of the described embodiments. Accordingly, the present invention is not to be seen as limited by the foregoing description but is limited by the scope of the appended claims.

## Claims

1. A system comprising:
an air conditioning system (100) associated with a building (102);
at least one energy storage device (200, 220, 290) including a thermally regenerative battery (220); and
a controller (250) configured to supply power from at least one of an AC power grid (280) and the thermally regenerative battery to one or more components of the air conditioning system.

2. The system of claim 1, wherein the air conditioning system (100) includes a first unit (110) and a second unit (120), and optionally wherein the system is a split system and the first unit (110) is an outdoor unit and the second unit (120) is an indoor unit.

3. The system of claim 1 or 2, wherein the air conditioning system (100) includes a compressor (150) including a compressor drive (160) configured to be connected directly to the AC power grid (280).

4. The system of any of the preceding claims, further comprising a power converter (260), the controller (250) being operable to control the power converter to supply power from at least one of the AC power grid (280) and the thermally regenerative battery (220) to the one or more components of the air conditioning system (100).

5. The system of claim 4, wherein the power converter (260) includes an AC/DC converter that provides power to the one or more components of the air conditioning system (100) and/or to the at least one energy storage device (220, 290).

6. The system of claim 4 or 5, further comprising a power bus (274) operably coupled to the power converter (260) and the AC power grid (280), the controller being operable to control the power bus to supply power from at least one of the AC power grid and the thermally regenerative battery (220) to the one or more components of the air conditioning system (100).

7. The system of claim 6, wherein the at least one energy storage device (200, 220, 290) includes an electric battery, the electric battery (290) being coupled to the power bus (274).

8. The system of claim 7, wherein the controller (250) is configured to supply power from the electric battery (290) to the one or more components of the air conditioning system (100), and/or wherein the controller (250) is configured to supply power from the power bus (274) to the electric battery (290).

9. The system of any of the preceding claims, further comprising a solar thermal collector (230) operably coupled to the thermally regenerative battery (220);
wherein optionally the at least one energy storage device includes a tank (202) containing a storage material, the storage material being thermally coupled to the air conditioning system (100),
and wherein optionally the solar thermal collector (230) is thermally coupled to the storage material.

10. A method of operating an air conditioning system (100), the method comprising:
determining whether a user has agreed to reduce an energy usage;
upon determining that the user has agreed to reduce the energy usage, at least partially powering one or more components of the air conditioning system using at least one energy storage device (200, 220, 290) including a thermally regenerative battery (220); and
upon determining that the user has not agreed to reduce the energy usage, powering one or more components of the air conditioning system using an AC power grid (280).

11. The method of claim 10, further comprising upon determining that the user has agreed to reduce the energy usage, powering at least one other load using the at least one energy storage device (200, 220, 290).

12. The method of claim 10 or 11, further comprising determining that the at least one energy storage device (200, 220, 290) is to be used to power one or more loads, and optionally wherein determining that the at least one energy storage device (200, 220, 290) is to be used to power one or more loads includes determining that power from the AC power grid (280) is at least one of (i) at a peak price or (ii) is at or approaching a grid capacity.

13. The method of any of claims 10 to 12, further comprising charging the at least one energy storage device (200, 220, 290).

14. The method of claim 13, wherein charging the thermally regenerative battery (220) includes:
converting radiation into thermal energy via a solar thermal collector (230); and
delivering the thermal energy to the thermally regenerative battery (220).

15. The method of claim 13 or 14, further comprising:
determining if a status of at least one energy storage device (200, 220, 290) is within safety and/or operational limits;
wherein upon determining that the status of at least one energy storage device is not within limits, continuing to charge the at least one energy storage device; and
wherein upon determining that the status of at least one energy storage device is within limits, powering at least one of the one or more components of the air conditioning system (100), other loads or the AC power grid (280) using the at least one energy storage device.
